# EUROPÄISCHE PATENTSCHRIFT

(11) **EP 0 948 753 B1**
(45) Veröffentlichungstag und Bekanntmachung des Hinweises auf die Patenterteilung: **27.03.2002**
(21) Anmeldenummer: 97947013.5
(22) Anmeldetag: 21.10.1997
(51) Int. Cl.: G02B 27/01

(54) **INFORMATIONSANZEIGESYSTEM FÜR MINDESTENS EINE PERSON**
INFORMATION DISPLAY SYSTEM FOR AT LEAST ONE PERSON
SYSTEME D'AFFICHAGE D'INFORMATIONS POUR AU MOINS UNE PERSONNE

(30) Priorität: 20.12.1996 DE 19653595
(43) Veröffentlichungstag der Anmeldung: 13.10.1999
(73) Patentinhaber: SIEMENS AKTIENGESELLSCHAFT, 80333 München (DE)
(72) Erfinder: KLEINSCHMIDT, Peter, D-81735 München (DE)
(86) Internationale Anmeldenummer: DE9702426
(87) Internationale Veröffentlichungsnummer: WO9828648

(56) Entgegenhaltungen:
- EP-A- 0 511 154
- DE-A- 4 445 555
- DE-A- 19 620 199
- US-A- 5 381 158
- US-A- 5 491 313
- PATENT ABSTRACTS OF JAPAN vol. 95, no. 8 & JP 07 121799 A (NIPPONDENSO), 12.Mai 1995, in der Anmeldung erwähnt
- PATENT ABSTRACTS OF JAPAN vol. 7, no. 176 (P-214) [1321] , 4.August 1983 & JP 58 080616 A (MITSUBISHI), 14.Mai 1983,

## Beschreibung

Die Erfindung betrifft ein Informationsanzeigesystem für mindestens eine Person.

Aus [Patent Abstracts of Japan; Publication No.: 07121799A; Application No.: 05262650] ist ein Anzeigegerät für ein Fahrzeug bekannt. Dieses Anzeigegerät vermittelt dem Fahrer des Fahrzeugs das Gefühl, als ob er einen optischen Spiegel auf dem Anzeigegerät des Fahrzeugs, das eine Videokamera aufweist, sehen würde.

Beim Führen von Kraft-, Nutz-, Schienen- und Spezialfahrzeugen sowie Schiffen und Flugzeugen aber auch für die Bedienung von Kränen, von medizinischen Diagnosegeräten, Leitwarten und vielen anderen technischen Einrichtungen ist es störend und oftmals auch gefährlich, den Blick vom Geschehen (Szene) abzuwenden, um die griffgünstig aber nicht notwendigerweise blickrichtig plazierten Bedieneinrichtungen abzulesen oder zu betätigen. Beispielhaft ist im Auto das Einlegen und Suchen von Datenträgern (Compact-Discs, Kassetten), der Umgang mit Geräten wie Fax, Handy, Karten während der Fahrt nur mit eingeschränkter Aufmerksamkeit für das Verkehrsgeschehen möglich.

Die Aufgabe des erfindungsgemäßen Verfahrens besteht darin, die Bedienung von griffgünstig gelegenen Einrichtungen zu ermöglichen, ohne daß der Blick von der Szene abschweifen müßte.

Diese Aufgabe wird gemäß den Merkmalen des Patentanspruchs 1 gelöst.

Somit liegt dem erfindungsgemäßen Verfahren der Gedanke zugrunde, daß mit Hilfe von Videotechniken die mechanische Bedienung und die dazu notwendige Sichtkontrolle örtlich voneinander getrennt werden können. Die Bedienelemente werder dort angeordnet, wo sie am besten erreicht werden können oder aus anderen Gründen hingehören. Der Blick des Fahrers/Bedieners kann auf die zu erledigende Arbeit gerichtet bleiben, beispielsweise beim Führen eines Kfz auf die Straße. Ein blickgünstig installiertes Display, beispielsweise ein Head-Up-Display, zeigt die von einer Videokamera aufgenommenen Bedienelemente und die bedienende Hand. Der Bediener kann sich selbst auf dem Display beim zielsicheren Hantieren zusehen. Durch das erfindungsgemäße Verfahren wird die Handhabung blickungünstig installierter Bedienelemente sicherer.

Eine vorteilhafte Weiterbildung des erfindungsgemäßen Verfahrens besteht darin, eine Beleuchtungsvorrichtung für das Bedienfeld zu verwenden, die Licht auf die Bedienelemente wirft. So kann die Beleuchtungsvorrichtung eine Lichtquelle mit für die Videokamera sichtbarer Wellenlänge verwenden, z.B. im infraroten Bereich. Um das Bild von zufälligen Schwankungen zu bereinigen, kann die Lichtquelle der Beleuchtungsvorrichtung intensitätsmodulierte Strahlung verwenden. Der Effekt kann noch gesteigert werden, indem vor der Kamera ein optisches Wellenlängen-Infrarot-Filter (Schwarzglas) sichtbares Licht abhält. Schließlich kann die Beleuchtungsvorrichtung in der gleichen Armatur ausgeprägt sein wie die Videokamera.

Weiterhin ist es zweckmäßig, das Display als Plachdisplay auszuführen, das direkt unterhalb der Windschutzscheibe eingelassen ist. Alternativ oder zusätzlich kann auch ein Projektionsdisplay verwendet werden, das wahlweise auf die Armaturen und/oder in die Windschutzscheibe projiziert wird. Bei Projektion auf die Armaturen können dort vorteilhaft Reflexionsflächen vorhanden sein. Bei Verwendung von Projektionsdisplays ist ein weiterer Vorteil des erfindungsgemäßen Verfahrens, daß sich dem Betrachter ein virtuelles Bild darstellt in vorgebbarer Entfernung und somit die Augen nicht zwischen Beobachten der Bedienelemente und Beobachten des Verkehrsgeschehens akkomodieren müssen.

Auch ist es vorteilhaft, wenn die Helligkeit des Displays automatisch an die Helligkeit der Szene angepaßt wird, wobei weiterhin dem Betrachter die Abstimmung der Helligkeit überlassen werden kann. Dabei kann die automatische Helligkeitsanpassung zur Regelung eine Fläche benutzen, die hauptsächlich durch die Windschutzscheibe in Fahrerrichtung eintretendes Licht integriert. Eine mögliche derartige Fläche kann das Gesicht des Fahrers sein. Die Messung der Helligkeit kann mittels Belichtungsmesser oder Videokamera durchgeführt werden.

Beispielsweise ist es vorteilhaft, von der Videokamera, je nach Einsatzgebiet des erfindungsgemäßen Verfahrens ein(e) oder mehrere der folgenden Bedienelemente, Geräte oder Anzeigen zu erfassen:
Klima/Lüftung, Audio, Video, Navigation, Telefon (auch Handy in Halterung), Fax, allgemeine Bedienelemente (z.B. Touchpad, Trackball), Radio-Stationsskala.

Zudem kann das Hantieren mit folgenden Elementen durch das erfindungsgemäße Verfahren blickgünstig dem Betrachter dargestellt werden:
Compact-Discs, Bänder für Audio und Video, Datenträger jeder Art, Chip-Karten.

Auch ist es zweckmäßig, wenn die klassischen Informationsmittel wie z.B. Landkarte, Stadtplan in das Display projiziert werden können und elektronisch im Display gedreht, verschoben, vergrößert/verkleinert und gespiegelt werden können. Als Bedienelement hierfür kann z.B. beim Führen eines Kfz eine Einrichtung am Lenkrad dienen.

Als vorteilhafte Weiterbildung des erfindungsgemäßen Verfahrens können mehrere Bedienfelder, die von einer Videokamera aufgenommen werden, vorhanden sein. Dabei könnten im Strahlengang der Videokamera in der Videokamera Strahlenteiler und Ablenkeinrichtungen für die Teilstrahlen ausgeführt sein, die es erlauben, mehrere Bedienfelder mit der gleichen Kamera als virtuell benachbarte Bedienfelder gemeinsam in das Display zu projizieren. Alternativ dazu kann die Videokamera mehrere Bedienfelder nacheinander im Zeimultiplex, z.B. mit gepulstem Infrarotlicht, aufnehmen und die sich ergebenden Bilder virtuell im Display darstellen.
Auch könnte mit dieser Videokamera, oder auch mit einer zusätzlichen Videokamera, das Gesicht des Fahrers beobachtet werden und dort sowohl die Information bezogen werden, wohin der Lichtstrahlengang des projizierten Displays führen soll, als auch kann dort die Helligkeitsinformation für die Regelung des Displays ermittelt werden.

Eine zweckmäßige Weiterbildung des erfindungsgemäßen Verfahrens besteht in der Projektion von virtuellen Gegenständen auf dem Display, die von einer virtuellen Eingabevorrichtung bedient werden. Diese Eingabe könnte z.B. die Hand des Fahrers sein, die von der Videokamera aufgenommen und entsprechend ihrer Position als Zeigereingabe verwendet wird. Der Vorteil hierbei besteht darin, daß virtuelle Geräte billiger sind als reale Geräte und sich leichter kundenspezifisch konfigurieren lassen.

Weiterhin ist es vorteilhaft, daß die Videokamera vorgebbare Bedienfelder überwacht und somit z.B. bei sicherheitskritischen Bedienfeldern zu vorgebbaren Zeiten oder Zeitdauern Aufnahmen speichert, die einer späteren Auswertung dienlich sein können.

Weiterbildungen des erfindungsgemäßen Verfahrens ergeben sich aus den abhängigen Ansprüchen.

Die Erfindung wird anhand eines Ausführungsbeispiels, das in der Figur dargestellt ist, näher erläutert.

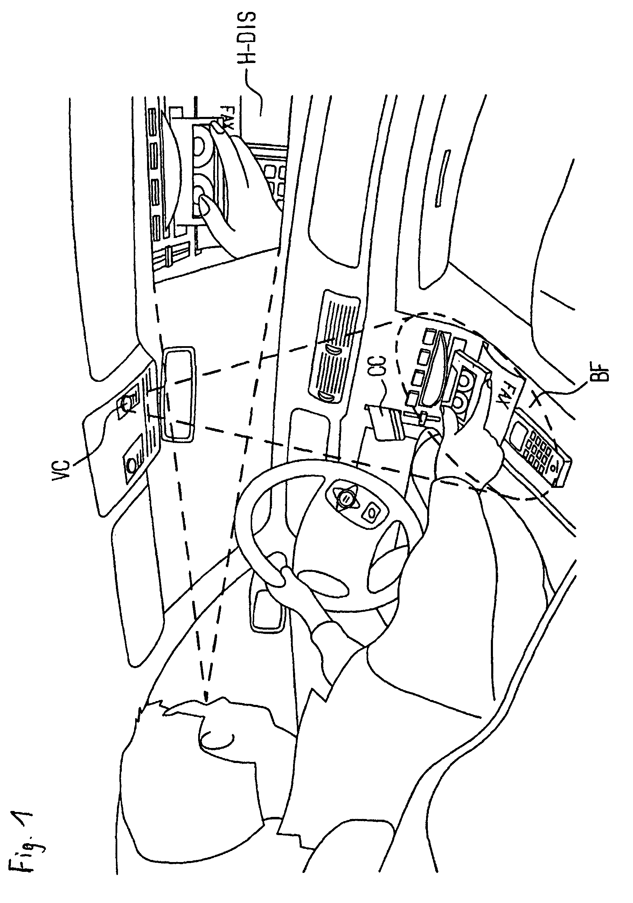

Es zeigt
- Fig. 1: eine Skizze, die beispielhaft die Projektion von blickungünstig plazierten Bedieneinrichtungen in die Blickrichtung des Führers eines Fahrzeugs zeigt.

In Fig.1 ist ein griffgünstig gelegenes Bedienfeld BF in einem Kfz dargestellt, das Einführvorrichtungen und Entnahmevorrichtungen für Medien (Compact-Disc, Kassette), einige Tasten, Skalen und Regler für Grundfunktionen (z.B. Lautstärke, Lüftung) sowie Ablage für mobile Geräte wie z.B. Handy enthält. Eine Videocamera VC im Kopfraum überwacht das Bedienfeld BF und als Display ist beispielhaft ein projiziertes Head-Up-Display H-DIS dargestellt. Somit können z.B. Kreditkarten oder sonstige Chipkarten CC eingelegt, das Handy bedient oder CDs gewechselt werden, ohne den Blick von der Straße zu nehmen. Der Fahrer sieht sich selbst beim Hantieren zu.

## Patentansprüche

1. Bedienplatz zur Darstellung einer Bedienoperation im Blickfeld eines Bedieners mit einer Bedieneinrichtung für mindestens einem Bediener innerhalb einer für ihn möglichen Bedienreichweite und einem Display, das im wesentlichen in Blickrichtung des Bedieners Person plaziert ist,
**dadurch gekennzeichnet, daß**
eine Videokamera (VC) auf die Bedieneinrichtung (BF) gerichtet ist und eine von der Videokamera (VC) aufgenommene Abbildung auf dem Display (H-DIS) dargestellt wird.

2. Bedienplatz nach Anspruch 1,
**dadurch gekennzeichnet, daß** eine Beleuchtungsvorrichtung vorhanden ist, die Licht auf die Bedieneinrichtung (BF) wirft.

3. Bedienplatz nach Anspruch 2,
**dadurch gekennzeichnet, daß** die Beleuchtungsvorrichtung eine Lichtquelle mit einer für die Videokamera (VC) sichtbaren Strahlung verwendet.

4. Bedienplatz nach Anspruch 2,
**dadurch gekennzeichnet, daß** die Beleuchtungsvorrichtung intensitätsmodulierte Strahlung verwendet.

5. Bedienplatz nach Anspruch 2,
**dadurch gekennzeichnet, daß** die Beleuchtungsvorrichtung in der gleichen Armatur wie die Videokamera (VC) angeordnet ist.

6. Bedienplatz nach einem der vorhergehenden Ansprüche,
**dadurch gekennzeichnet, daß** das Display (H-DIS) ein Flachdisplay ist, das direkt unterhalb einer Windschutzscheibe eingelassen ist.

7. Bedienplatz nach einem der vorhergehenden Ansprüche,
**dadurch gekennzeichnet, daß** das Display (H-DIS) ein Projektionsdisplay ist, das auf das Armaturenbrett und/oder in die Windschutzscheibe projiziert wird.

8. Bedienplatz Anspruch einem der vorhergehenden Ansprüche,
**dadurch gekennzeichnet, daß** die Helligkeit des Displays (H-DIS) an die Helligkeit der Szene im Blickfeld angepaßt wird.

9. Bedienplatz nach Anspruch 8,
**dadurch gekennzeichnet, daß** zur Regelung der Helligkeit eine Fläche benutzt wird, die durch die Windschutzscheibe eintretendes Licht integriert.

10. Bedienplatz nach Anspruch 9,
**dadurch gekennzeichnet, daß** die Fläche das Gesicht des Betrachters, dem die Videokamera (VC) bei Veränderung der Position folgt, ist.

11. Bedienplatz nach einem der vorhergehenden Ansprüche,
**dadurch gekennzeichnet, daß** von der Videokamera (VC) verschiedene Bedienfelder (BF) beobachtet werden und diese in beliebiger Anordnung in Blickrichtung projiziert werden.

12. Bedienplatz nach 2, einem der vorhergehenden Ansprüche,
**dadurch gekennzeichnet, daß** virtuelle Geräte bedient werden, indem die von der Videokamera (VC) erfaßte Eingabeeinheit, insbesondere eine Hand, in Blickrichtung auf eine virtuelle Bedieneinheit projiziert wird.

13. Bedienplatz nach einem der vorhergehenden Ansprüche,
**dadurch gekennzeichnet, daß** zu vorgebbaren Zeiten Videobilder von Bedienoperationen gespeichert werden.

14. Bedienplatz nach einem der vorhergehenden Ansprüche,
**dadurch gekennzeichnet, daß** die Abbildung auf dem Display elektronisch gedreht, verschoben, vergrößert, verkleinert und gespiegelt werden kann.

## Claims

1. Operator control console for representing an operator control operation in the field of vision of an operator having an operator control device for at least one operator within an operating range which is possible for him, and a display which is placed essentially in the viewing direction of the operator, **characterized in that** a video camera (VC) is directed at the operator control device (BF) and an image recorded by the video camera (VC) is represented on the display (H-DIS).

2. Operator control console according to Claim 1, **characterized in that** an illumination device is provided which projects light onto the operator control device (BF).

3. Operator control console according to Claim 2, **characterized in that** the illumination device uses a light source with radiation which is visible for the video camera (VC).

4. Operator control console according to Claim 2, **characterized in that** the illumination device uses intensity-modulated radiation.

5. Operator control console according to Claim 2, **characterized in that** the illumination device is arranged in the same fitting as the video camera (VC).

6. Operator control console according to one of the preceding claims, **characterized in that** the display (H-DIS) is a flat screen display which is let in directly underneath the windscreen.

7. Operator control console according to one of the preceding claims, **characterized in that** the display (H-DIS) is a projection display which is projected onto the dashboard and/or into the windscreen.

8. Operator control console according to one of the preceding claims, **characterized in that** the brightness of the display (H-DIS) is adapted to the brightness of the scene in the field of vision.

9. Operator control console according to Claim 8, **characterized in that** the surface which integrates light entering through the windscreen is used for regulating the brightness.

10. Operator control console according to Claim 9, **characterized in that** the surface is the viewer's face which the video camera (VC) follows as it changes position.

11. Operator control console according to one of the preceding claims, **characterized in that** various operator control panels (BF) are observed by the video camera (VC) and projected in the viewing direction in any desired arrangement.

12. Operator control console according to one of the preceding claims, **characterized in that** virtual devices are operated **in that** the input unit, in particular a hand, which is picked up by the video camera (VC) is projected onto a virtual operator control unit in the viewing direction.

13. Operator control console according to one of the preceding claims, **characterized in that** video images of operator control operations are stored at predefineable times.

14. Operator control console according to one of the preceding claims, **characterized in that** the image on the display can be electronically rotated, displaced, enlarged, reduced and mirrored.

## Revendications

1. Poste de commande pour représenter une opération de commande dans le champ de vision d'un opérateur, comportant un dispositif de commande pour au moins un opérateur, disposé à portée d'atteinte par cet opérateur, et comportant un afficheur qui est placé essentiellement dans la direction d'observation de l'opérateur,
**caractérisé en ce qu'**une caméra (VC) vidéo est dirigée sur le dispositif (BF) de commande et une image enregistrée par la caméra (VC) vidéo est représentée sur l'afficheur (H-DIS).

2. Poste de commande suivant la revendication 1, **caractérisé en ce qu'**il y a un dispositif d'éclairage, qui projette de la lumière sur le dispositif (BF) de commande.

3. Poste de commande suivant la revendication 2, **caractérisé en ce que** le dispositif d'éclairage utilise une source lumineuse dotée d'un rayonnement visible pour la caméra (VC) vidéo.

4. Poste de commande suivant la revendication 2, **caractérisé en ce que** le dispositif d'éclairage utilise un rayonnement modulé en intensité.

5. Poste de commande suivant la revendication 2, **caractérisé en ce que** le dispositif d'éclairage est disposé dans le même support que la caméra (VC) vidéo.

6. Poste de commande suivant l'une des revendications précédentes, **caractérisé en ce que** l'afficheur (H-DIS) est un afficheur plat, qui est installé juste en dessous d'un pare-brise.

7. Poste de commande suivant l'une des revendications précédentes, **caractérisé en ce que** l'afficheur (H-DIS) est un afficheur par projection, qui est projeté sur le tableau de bord et/ou sur le pare-brise.

8. Poste de commande suivant l'une des revendications précédentes, **caractérisé en ce que** la luminosité de l'afficheur (H-DIS) est adaptée à la luminosité du lieu, situé dans le champ de vision, où se déroule l'action.

9. Poste de commande suivant la revendication 8, **caractérisé en ce que**, afin de régler la luminosité, on utilise une surface qui intègre la lumière pénétrant à travers le pare-brise.

10. Poste de commande suivant la revendication 9, **caractérisé en ce que** ladite surface est le visage de l'observateur, que suit la caméra (VC) vidéo lorsqu'il change de position.

11. Poste de commande suivant l'une des revendications précédentes, **caractérisé en ce que** la caméra (VC) vidéo observe plusieurs champs (BF) de commande et les projette dans un agencement quelconque dans la direction d'observation.

12. Poste de commande suivant l'une des revendications précédentes, **caractérisé en ce qu'**on commande des appareils virtuels, par le fait que l'unité de saisie enregistrée par la caméra (VC) vidéo, notamment une main, est projetée dans la direction d'observation sur une unité de commande virtuelle.

13. Poste de commande suivant l'une des revendications précédentes, **caractérisé en ce que** des images vidéo d'opérations de commande sont mémorisées à des instants pouvant être prescrits.

14. Poste de commande suivant l'une des revendications précédentes, **caractérisé en ce que** la reproduction sur l'afficheur peut être, par voie électronique, pivotée, déplacée, agrandie, réduite et réfléchie.
